# FASCICULE DE BREVET EUROPEEN

(11) **EP 1 363 952 B1**
(45) Date de publication et mention de la délivrance du brevet: **27.07.2005**
(21) Numéro de dépôt: 02710986.7
(22) Date de dépôt: 11.01.2002
(51) Int. Cl.: C08F 2/44

(54) **PROCEDE D'OBTENTION D'UN LATEX PHOTOCHROMIQUE STABILISE, LATEX OBTENU ET APPLICATION A L'OPTIQUE OPHTALMIQUE**
VERFAHREN ZUR HERSTELLUNG EINES PHOTOCHROMEN STABILISIERTEN LATEX, SO HERGESTELLTES LATEX UND SEINE VERWENDUNG IN DER OPHTALMISCHEN LATEX
METHOD FOR OBTAINING A STABILISED PHOTOCHROMIC LATEX, LATEX OBTAINED AND USE IN OPHTHALMIC OPTICS

(30) Priorité: 11.01.2001 FR 0100343
(43) Date de publication de la demande: 26.11.2003
(73) Titulaire: ESSILOR INTERNATIONAL COMPAGNIE GENERALE D'OPTIQUE, 94227 Charenton cédex (FR)
(72) Inventeur: TARDIEU, Pascale, F-75011 PARIS (FR); MAISONNIER, Sylvette, F-95570 MOISSELLES (FR); ROBERT, Anne, F-94440 VILLECRESNE (FR); CANO, Jean-Paul, F-94470 CHENNEVIERES sur MARNE (FR)
(74) Mandataire: Catherine, Alain
(86) Numéro de dépôt international: PCT/FR2002/000116
(87) Numéro de publication internationale: WO 2002/055564

(56) Documents cités:
- WO-A-89/05464
- FR-A- 2 790 264

## Description

L'invention concerne d'une manière générale un procédé d'obtention d'un latex photochromique dont les propriétés, en particulier photochromiques, restent stables au cours du temps, les latex photochromiques ainsi stabilisés et leur application à l'optique ophtalmique.

Il est déjà connu de préparer des latex photochromiques par polymérisation en émulsion aqueuse de monomères acryliques ou méthacryliques comprenant un ou plusieurs composé(s) photochromique(s).

Ces latex photochromiques sont classiquement obtenus en préparant une première solution comprenant le ou les monomère(s), le ou les composé(s) photochromique(s) et une deuxième solution comprenant le milieu de dispersion, généralement de l'eau et un agent tensioactif, en mélangeant les deux solutions avec une agitation vigoureuse pour obtenir une pré-émulsion. La pré-émulsion est alors transférée en une seule fois dans un réacteur et est dégazée sous azote avec agitation. A la fin du dégazage, on introduit l'amorceur de polymérisation généralement en solution dans un solvant (typiquement de l'eau) et on effectue la polymérisation à chaud pour obtenir le latex.

Le latex obtenu est alors grossièrement filtré sur tissu puis stocké à l'abri de la lumière.

Un tel procédé d'obtention d'un latex à propriétés photochromiques est décrit dans le document FR 2.790.264.

La demande de brevet français FR 2.816.950 déposée le 17 novembre 2000 décrit l'utilisation de mini-émulsions pour la préparation de latex photochromiques.

Plus particulièrement, selon ce procédé, l'obtention d'un latex photochromique comprend la préparation d'un mélange comprenant au moins un monomère à groupement C=C polymérisable par voie radicalaire, au moins un composé photochromique organique, au moins un agent tensioactif, de l'eau et éventuellement un amorceur de polymérisation, le traitement du mélange obtenu pour former une mini-émulsion comprenant une phase organique dispersée sous forme de gouttelettes ayant un diamètre de 50 à 500 nm, de préférence 50 à 300 nm, dans une phase aqueuse, l'addition à la mini-émulsion d'un amorceur de polymérisation, si celui-ci n'a pas été introduit initialement, ou une quantité supplémentaire d'amorceur par rapport à la quantité introduite initialement, la polymérisation du mélange réactionnel obtenu et la récupération du latex photochromique.

De préférence, le mélange initial est obtenu en préparant séparément une première solution comprenant le ou les monomère(s), le ou les composé(s) photochromique(s) et éventuellement le ou les agent(s) de stabilisation et une deuxième solution comprenant l'eau et le ou les agent(s) tensioactif(s), puis en réunissant les deux solutions.

La mini-émulsion est obtenue par exemple par émulsification au moyen d'un micro-fluidiseur tel que le micro fluidiseur décrit dans le brevet US 4.533.254.

L'utilisation de mini-émulsions pour la polymérisation en émulsion est également décrite dans les documents FR 2.785.904, EP 852.239, US 5.569.716, US 5.653.965 et WO 98/50436.

Les latex obtenus par les procédés classiques et le procédé de polymérisation en mini-émulsion, bien que donnant pleine satisfaction lorsqu'ils sont déposés et séchés peu de temps après leur obtention, présentent cependant l'inconvénient d'une perte significative de leurs propriétés photochromiques au cours du temps.

Plus précisément, les dosages par chromatographie en phase liquide à haute pression (HPLC) effectués sur des latex photochromiques, quels que soient leurs procédés d'obtention, classique ou par mini-émulsion, ont révélé une baisse de la teneur en composés photochromiques dans le temps au sein du latex liquide. Cette dégradation est généralement très rapide et peut conduire à une diminution de 50% de la teneur en composés photochromiques dans le latex liquide, en un mois.

Le problème de la stabilisation des composés photochromiques présents dans des résines pour couches minces a déjà été abordé dans l'art antérieur, mais il s'agit alors le plus souvent de stabiliser ceux-ci vis-à-vis de dégradations extérieures comme la lumière, et en particulier les rayonnements UV.

Ainsi, le brevet US 5.914.174 décrit des résines photochromiques comprenant des additifs tels que des antioxydants, des agents piégeurs de radicaux et des absorbeurs UV. En particulier, il est précisé dans ce brevet que l'utilisation d'amines encombrées et d'agents d'élimination d'espèce à l'état excité augmente les performances vis-à-vis des intempéries.

Dans le cas des latex, le problème technique qui se pose est celui de la dégradation des composés photochromiques au sein des latex liquides, c'est-à-dire avant leur application en film, et même en l'absence de tout facteur extérieur susceptible d'altérer ou de dégrader les propriétés des composés photochromiques.

Il est particulièrement significatif de noter que la dégradation des latex photochromiques se produit même lorsque ceux-ci sont conservés dans des récipients fermés, à l'abri de l'air ambiant et en l'absence de lumière. Il s'agit donc là d'un problème tout à fait spécifique aux latex.

L'invention a donc pour objet de fournir un procédé d'obtention d'un latex photochromique dont les propriétés, en particulier photochromiques, restent stables au cours du temps, en particulier lorsque ce latex est conservé à l'abri de l'air ambiant et en l'absence de lumière.

L'invention a également pour objet un latex photochromique stabilisé, dont les propriétés photochromiques restent stables au cours du temps, en particulier lorsque ce latex est conservé à l'abri de l'air ambiant et en l'absence de la lumière.

L'invention a encore pour objet des substrats, en particulier des articles d'optique tels que des lentilles ophtalmiques, revêtus de films séchés des latex tels que définis ci-dessus.

Les buts ci-dessus sont atteints selon l'invention par un procédé d'obtention de latex photochromiques comprenant une polymérisation en émulsion aqueuse d'un mélange polymérisable initial comprenant un ou plusieurs monomère(s) organique(s) à groupement C=C polymérisable par voie radicalaire et un ou plusieurs composé(s) photochromique(s) jusqu'à obtention d'un latex final, caractérisé en ce qu'il comprend l'addition au mélange polymérisable initial, au cours de la polymérisation du mélange polymérisable initial ou au latex final d'une quantité effective d'au moins un agent de stabilisation choisi parmi les composés du cyclopentène, du cyclohexène, du cycloheptène, du cyclooctène et les composés comprenant une insaturation éthylénique ne faisant pas partie d'un cycle aromatique et qui comporte, en position α par rapport à l'insaturation éthylénique, un atome de carbone portant un groupe hydroxy libre.

De préférence, l'agent de stabilisation est introduit dans le mélange polymérisable initial.

Dans la présente demande, on entend par latex final un latex dont la teneur en extrait sec n'évolue plus dans le temps. Généralement, le latex final est obtenu au bout d'environ 1 heure de réaction.

L'invention concerne également un latex photochromique stabilisé comprenant une dispersion dans une phase aqueuse de particules de polymères résultant de la polymérisation en phase aqueuse d'un mélange d'un ou plusieurs monomères organiques à groupement C=C polymérisable par voie radicalaire et un ou plusieurs composés photochromiques et une quantité effective d'au moins un agent de stabilisation choisi parmi les composés du cyclopentène, du cyclohexène, du cycloheptène, du cyclooctène et les composés comprenant une insaturation éthylénique ne faisant pas partie d'un cycle aromatique et qui comportent, en position α par rapport à l'insaturation éthylénique, un atome de carbone portant un groupe hydroxy libre.

Les agents de stabilisation des propriétés photochromiques selon l'invention sont des composés connus comme agents anti-jaunissement dans des formulations à base de diméthacrylates de bisphenol A ou de diallylcarbonate de bisphénol A. Ces agents sont décrits entre autres dans les brevets US 5.702.825 et EP 224.123.

Plus particulièrement, ces agents de stabilisation sont des composés du cyclopentène, du cyclohexène, du cycloheptène, du cyclooctène et les composés comprenant une insaturation éthylénique ne faisant pas partie d'un cycle aromatique et qui comportent, en position α par rapport à l'insaturation éthylénique, un atome de carbone portant un groupe hydroxy libre.

Les agents de stabilisation préférés sont les dérivés du cyclohexène.

On peut utiliser comme agent de stabilisation une grande variété de composés cyclohexéniques. Les composés cyclohexéniques peuvent être représentés par la formule : 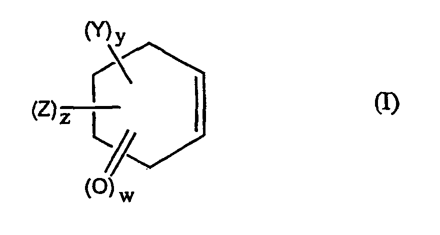 dans laquelle chaque Y est indépendamment un groupe alkyle ayant de 1 à 4 atomes de carbone, Z est un groupe hydroxyle, 2-oxo-éthyle, hydroxyalkyle ayant de 1 à 3 atomes de carbone, alcoxycarbonyle ayant de 2 à 5 atomes de carbone, ou 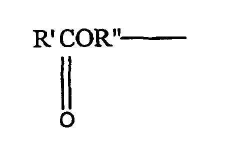 dans laquelle R' est un radical alkyle ayant de 1 à 4 atomes de carbone et R" est un radical alcane di-yle ayant de 2 à 4 atomes de carbone ou alkylidène ayant de 1 à 5 atomes de carbone, y est un entier de 0 à 3, z représente 0 ou 1, w représente 0 ou 1, et la somme de z et w est égale à 0 ou 1.

Y est de préférence un groupe méthyle. Les groupes représentés par Y peuvent être identiques ou différents.

Lorsque Z est groupe hydroxyalkyle, c'est typiquement un groupe hydroxyméthyle, 2-hydroxyéthyle, ou 1-hydroxy-1-méthyléthyle. Lorsque Z est un alcoxy carbonyle, il renferme typiquement 2 ou 3 atomes de carbone. Le groupe préféré est le groupe méthoxycarbonyle. R' est de préférence un groupe méthyle, éthyle ou propyle. Lorsque R" est un groupe alcane di-yle, il peut être linéaire ou ramifié. Le groupe préféré est le groupe éthane di-yle. Lorsque R" est un groupe alkylidène, c'est classiquement le groupe méthylène ou un méthyl éthylidène. De préférence, y est égal à 0 ou 1. De même, de préférence z est égal à 0 ou 1. De préférence encore, w est égal à 0.

A titre d'exemple de composés cyclohexéniques pouvant être utilisés dans l'invention, on peut citer le cyclohexène, l'α-terpinéol, le terpinène-4-ol, l'α-terpinylacétate, l'α-terpinylpropionate, l'α-terpinylbutyrate, le 1-méthyl-1-cyclohexène, le 3-méthyl-1-cyclohexène, le 4-méthyl-1-cyclohexène, le méthyl-1-cyclohexène-1-carboxylate, le 3-méthyl-2-cyclohexène-1-ol, le 3-méthyl-2-cyclohexène-1-one, le 4-isopropyl-2-cyclohexène-1-one, le 3,5-diméthyl-2-cyclohexène-1-one, le 4,4-diméthyl-2-cyclohexène-1-one, l'isophorone, le 2,6,6-triméthyl-1-cyclohexène-1-acétaldéhyde, et le 3,5,5-triméthyl-2-cyclohexène-1-ol. Les dérivés cyclohexéniques préférés sont le cyclohexène, l'α-terpinylacétate, l'α-terpinylpropionate et l'α-terpinylbutyrate, tout particulièrement le cyclohexène, l'α-terpinylacétate ou un mélange de ceux-ci.

Les composés à insaturation éthylénique convenant pour l'invention comprennent comme indiqué précédemment une insaturation éthylénique ne faisant pas partie d'un cycle aromatique et comportent en position α par rapport à l'insaturation éthylénique un atome de carbone portant un groupe hydroxylique et qui de préférence est lié au moins à un atome d'hydrogène.

Ces composés à insaturation éthylénique sont de préférence choisis parmi les composés de formule : 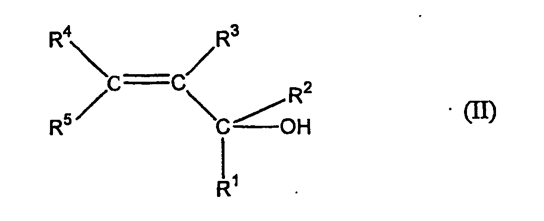 dans laquelle R¹, R² représentent l'hydrogène ou l'un des groupes R¹ et R² représente l'hydrogène, cependant que l'autre forme avec le groupe R⁵ un cycle en C₅-C₁₀ qui peut être substitué par un ou plusieurs groupes alkyle linéaires ou ramifiés en C₁-C₄ ou un ou plusieurs groupes alkylène en C₂-C₄ ; ou un des groupes R¹, R² peut représenter l'hydrogène cependant que l'autre représente un groupe alkyle aliphatique en C₁-C₆, un groupe hydrocarboné cyclique en C₄-C₁₆ ou un groupe hydrocarboné aromatique en C₆-C₁₆ ;
R³, R⁴ et R⁵, indépendamment les uns des autres, représentent l'hydrogène ou un groupe alkyle en C₁-C₆ qui peut être substitué par un ou plusieurs groupes OH et dans lesquels la chaîne peut être interrompue par un ou plusieurs groupes éther, ester ou cétone ; un groupe hydrocarboné aromatique en C₆-C₁₆ ou un groupe hydrocarboné cyclique en C₄-C₁₆ ; R⁵ peut former, avec un des groupes R¹ ou R², un cycle en C₅-C₁₀ qui peut être substitué par un ou plusieurs groupes alkyle linéaires ou ramifiés en C₁-C₄ ou un ou plusieurs groupes alkylène C₂-C₄ ;
R³ et R⁴ peuvent former un cycle en C₅-C₁₀ qui peut être substitué par un ou plusieurs groupes alkyle en C₁-C₄ ou groupes alkylène en C₂-C₄ ;
Deux ou plus des atomes de carbone du cycle en C₅-C₁₀ formés avec R¹ ou R² et R⁵ ou avec R³ et R⁴, peuvent être liés par un pont hydrocarboné.

Selon l'invention, le groupe alkyle en C₁-C₆ est de préférence un groupe méthyle ou éthyle.

De préférence, R¹ et R² représentent l'hydrogène, R³ représente un groupe méthyle, R⁴ représente l'hydrogène ou un groupe méthyle et R⁵ représente l'hydrogène, un groupe méthyle, un groupe éthyle ou un groupe CH₂OH.

Les composés à insaturation éthylénique de formule (II) préférés sont l'alcool allylique, l'alcool méthallylique, l'alcool crotylique, le 2-cyclohexène-1-ol, le trans-2-hexène-1-ol, le cis-2-butène-1-4-diol, le 3-méthyl-2-butène-1-ol, le trans-2-méthyl-3-phényl-2-propène-1-ol, le 3-butène-2-ol, le carvéol, le myrténol, le verbénol et l'alcool transcinnamylique.

Le composé à insaturation éthylénique particulièrement préféré est le 3-méthyl-2-butène-1-ol (MBOL).

Comme indiqué ci-dessus, le ou les agent(s) de stabilisation des propriétés photochromiques peuvent être introduits à tout moment au cours de la préparation du latex, et en particulier dans le mélange de monomères initial ou dans le latex final, c'est-à-dire en fin de synthèse du latex, lorsque l'extrait sec obtenu est stable et n'évolue plus au cours du temps. Cette fin de synthèse intervient généralement après 1 heure de réaction.

De préférence, toutefois, l'introduction du ou des agent(s) de stabilisation des propriétés photochromiques se fait dans le mélange polymérisable initial.

La quantité d'agent de stabilisation introduite peut varier dans de larges mesures, mais doit être au moins suffisante pour obtenir une stabilisation significative des propriétés photochromiques du latex final.

Généralement, la quantité du ou des agent(s) de stabilisation ajoutée représente 0,1 à 10% en masse, de préférence 1 à 10% en masse et mieux environ 5% en masse par rapport à la masse des monomères du mélange initial.

Les monomères polymérisables par voie radicalaire convenant pour la présente invention peuvent être aromatiques ou non aromatiques.

Les monomères recommandés sont des monomères de type (méth)acrylate d'alkyle, de préférence de type mono(méth)acrylate et leurs mélanges.

Les groupements alkyle sont de préférence des groupements alkyle en C₁-C₁₀, tels que méthyle, éthyle, propyle et butyle.

Parmi les monomères préférés, on peut citer les acrylates et les méthacrylates de méthyle, éthyle, propyle, butyle, isobutyle ou encore des dérivés bisfonctionnels tels que le butane diol di(méth)acrylate ou trifonctionnels tels que le triméthylol propane tri(méth)acrylate.

Parmi les monomères aromatiques préférés, on peut citer des composés aromatiques monofonctionnels tels que le phényl(méth)acrylate, le benzyl(méth)acrylate, le phénoxyéthyl(méth)acrylate, et le styrène.

On peut également utiliser des mélanges de ces monomères, en particulier des mélanges de monomères d'alkyle en C₂-C₁₀ et de méthacrylate d'alkyle en C₁-C₃.

Le latex photochromique stabilisé revendiqué comprend un polymère caractérisé en ce qu'il est un polyacrylate d'alkyle, un polyméthacrylate d'alkyle ou un copolymère d'acrylate d'alkyle et de méthacrylate d'alkyle.

Les composés photochromiques organiques convenant dans la présente invention sont tous composés organiques présentant des propriétés photochromiques. Ces composés sont bien connus dans la technique.

Les composés préférés sont les chromènes et les spirooxazines et leurs mélanges.

Les chromènes sont décrits entre autres dans les documents US 3.567.605, US 5.066.818, US 5.645.767, US 5.656.206, WO 93/17071, WO 94/20869, FR 2.688.782, FR 2.718.447, EP 0.401.958 et EP 0.562.915.

Les spirooxazines sont également des composés photochromiques bien connus. De tels composés sont décrits, entre autres, dans les brevets US 5.114.621, EP 0.245.020, JP A 03251587, WO 96/04590 et FR 2.763.070.

Le composé photochromique est introduit en quantité suffisante pour obtenir l'effet photochromique recherché dans les films finaux de latex.

Les concentrations en composés photochromiques varient généralement de 1 à 10%, de préférence de 2 à 7% en masse par rapport à la masse des monomères polymérisables présents dans le latex.

Pour favoriser la solubilisation du composé photochromique, on peut éventuellement rajouter dans ce mélange une faible quantité d'un solvant du composé photochromique, par exemple de la N-méthylpyrrolidone dans le cas des chromènes. La quantité de solvant rajoutée peut aller jusqu'à 20% en masse (selon la solubilité du composé photochromique) par rapport à la masse des monomères polymérisables présents dans le mélange initial.

Comme cela est également classique, le mélange polymérisable initial peut comporter un agent tensioactif. L'agent tensioactif peut être ionique, non ionique ou amphotère. Parmi les agents tensioactifs ioniques, on peut citer le dodécylsulfate de sodium, le dodécylbenzène sulfate de sodium, le sulfonate de sodium, les sulfates d'alcool gras éthoxylés et le bromure de céthyltriméthyl ammonium (CTAB), l'acide azobiscyanopentanoïque (dissous et neutralisé).

Parmi les tensioactifs non ioniques, on peut citer les alcools gras éthoxylés.

On peut évidemment utiliser un mélange d'agents tensioactifs dans le mélange de polymérisation initial.

Le mélange polymérisable initial comporte en outre un amorceur de polymérisation.

L'amorceur de polymérisation peut être tout amorceur classiquement utilisé. Il peut être soluble dans l'eau ou la phase organique.

Les amorceurs solubles dans l'eau utilisés pour la polymérisation des compositions selon l'invention sont des sels et composés possédant au moins une fonction hydrophile.

Parmi ces sels et composés, on peut citer des persulfates des métaux alcalin et d'ammonium, en particulier les persulfates de sodium ou de potassium, l'eau oxygénée, le dihydrochlorure de 2,2'-azobis(2-amidinopropane).

On peut également utiliser des péroxydes partiellement hydrosolubles tels que le peracide succinique et l'hydroperoxyde de t-butyle.

On peut également employer des systèmes redox tels que les persulfates associés à un ion ferreux.

Egalement, on peut utiliser l'hydroperoxyde de cumyle ou l'eau oxygénée, en présence d'ions ferreux, sulfites ou bisulfites.

Parmi les amorceurs solubles dans la phase organique, on peut citer l'azobisizobutyronitrile (AIBN). L'amorceur peut être ajouté en une seule fois dans le mélange polymérisable initial, mais il est également possible de le rajouter de façon semi-continue durant la réaction de polymérisation.

La phase aqueuse du latex peut comporter uniquement de l'eau ou elle peut comprendre un mélange d'eau et de solvant approprié, par exemple pour aider à la filmification. La phase aqueuse peut comporter également un tampon, par exemple NaHCO₃. Lorsqu'un solvant est présent, il peut généralement représenter jusqu'à 10% en masse de la phase aqueuse, de préférence moins de 5% en masse et mieux encore moins de 2% en masse.

De préférence, la phase aqueuse comprend uniquement de l'eau.

Comme indiqué précédemment, la polymérisation en émulsion du mélange polymérisable initial de monomères peut s'effectuer de manière classique ou par la technique dite de « mini-émulsion ».

Lorsqu'on utilise la technique de mini-émulsion, on peut également rajouter au mélange polymérisable initial de monomères un agent de stabilisation de la mini-émulsion.

Cet agent de stabilisation d'une mini-émulsion peut être un alcane, un alcane halogéné ou un monomère polymérisable ou non, comportant une chaîne grasse telle qu'un alcool gras ou un ester d'alcool gras.

Les agents de stabilisation préférés sont l'hexadécane, l'alcool cétylique et le méthacrylate de stéaryle.

L'agent particulièrement préféré est le méthacrylate de stéaryle car il s'intègre dans le réseau, en raison de la présence de la fonction méthacrylate.

La teneur en agents de stabilisation dans le mélange varie généralement de 0,1 à 10%, de préférence de 2 à 6% en masse par rapport à la masse de monomères polymérisables présents dans le mélange initial.

Le dépôt sur des substrats des latex selon l'invention peut s'effectuer par toute méthode classique : centrifugation, pulvérisation, ou en combinant l'un et l'autre de ces procédés.

Dans les exemples suivants, sauf indication contraire, tous les pourcentages et parties sont exprimés en masse.

### EXEMPLES 1 A 5 ET EXEMPLE COMPARATIF A

Des agents de type méthyl-2-butène-1-one et cyclohéxène ont été introduits dans les formulations (5% en masse par rapport à la masse totale de monomère du mélange initial).

Les compositions des mélanges polymérisables initiaux utilisés sont données dans le tableau I ci-dessous :

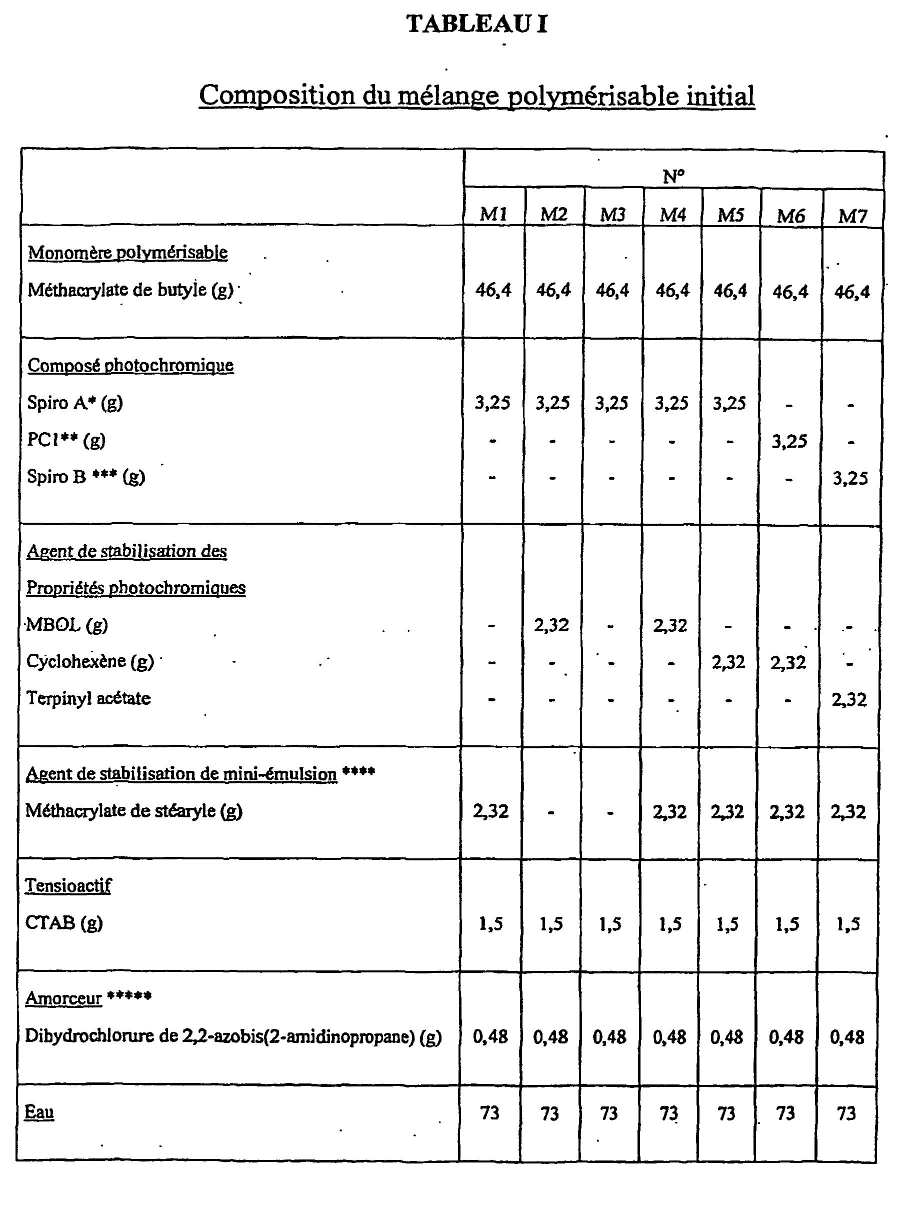

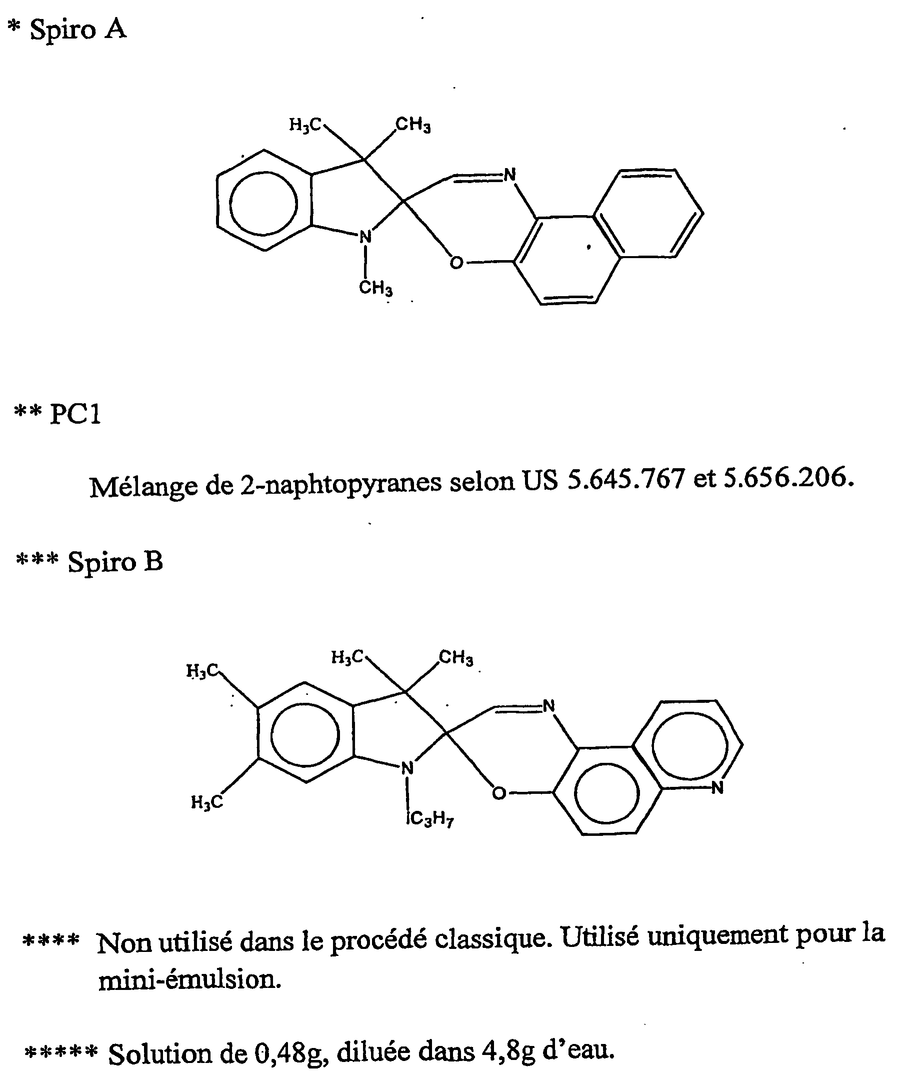

Les latex ont été préparés soit par un procédé de polymérisation en émulsion classique, soit par un procédé de polymérisation en mini-émulsion.

Les mélanges initiaux ont été préparés en combinant une solution A contenant le monomère polymérisable, éventuellement l'agent de stabilisation des propriétés photochromiques et l'agent de stabilisation de mini-émulsion et le composé photochromique à une solution B contenant le tensioactif et de l'eau.

Les émulsions classiques ont été obtenues par simple agitation mécanique des mélanges.

Pour obtenir les mini-émulsions, les mélanges sont traités en une seule passe dans un microfluidiseur STANSTED FLUID POWER LTD ; modèle nm-CEN 7400 H à une pression de 70 MPa.

Les émulsions classiques et mini-émulsions sont ensuite transférées dans un réacteur et soumises à un dégazage sous azote pendant 30 minutes à 60°C, sous agitation avec un agitateur tournant à 250 tours par minute.

On a alors préparé une solution d'amorceur en dissolvant 0,48g de dihydrochlorure de 2,2'-azobis(2-amidinopropane) dans 4,8g d'eau et on ajoute en une seule fois cette solution dans le réacteur contenant 103g d'émulsion ou mini-émulsion pour initier la réaction de polymérisation.

La polymérisation est effectuée à une température de 60°C.

A la fin de la polymérisation, on arrête le chauffage et on laisse refroidir jusqu'à la température ambiante (23°C) et éventuellement, on ajoutait la quantité appropriée d'agent, de stabilisation des propriétés photochromiques lorsque celui-ci n'a pas été ajouté dans le mélange polymérisable initial.

Les conditions de préparation des latex des exemples comparatifs A et 1 à 5 sont données dans le Tableau II ci-après :

**TABLEAU II**

| Exemple N° | Mélange initial | Type d'émulsion | Ajout d'agent de stabilisation des propriétés photochromiques dans le latex final | |
|---|---|---|---|---|
| | | | MBOL (g) | Cyclohexène (g) |
| Comparatif A | M1 | Mini-émulsion | - | - |
| 1 | M2 | Classique | - | - |
| 2 | M3 | Classique | 2,32 | - |
| 3 | M4 | Mini-émulsion | - | - |
| 4 | M5 | Mini-émulsion | - | - |
| 5 | M6 | Mini-émulsion | - | - |
| 6 | M7 | Mini-émulsion | - | - |

L'évolution des latex obtenus a été suivie par dosage HPLC du colorant photochromique.

Pour se faire, on a réalisé dans le temps divers prélèvements des latex et on réalisait, à partir de ces prélèvements par dépôt centrifuge (200 tours par minute pendant 10 secondes, puis 1000 tours par minute pendant 10 secondes), sur des verres SIGMAL et séchage en étuve à 50°C, des films transparents photochromiques, d'épaisseur 3,7 µm.

On récupérait les films et on extrayait les composés photochromiques avec 10 ml d'acétonitrile à 80°C en présence d'un étalon interne KEMIX n°16. Cette extraction s'effectuait pendant 20mm. Après agitation, la solution était filtrée puis analysée par chromatographie en phase liquide à haute pression (HPLC) en phase inverse. La chromatographie était effectuée sur colonne KROMASIL® C18 (TOUZART et MATIGNON).

Le solvant d'élution était un mélange d'acétonitrile/eau (80/20) en mode d'élution isocratique ou en mode gradient et la vitesse d'élution était de 1 ml/minute. Le détecteur utilisé était un détecteur WATERS 484 à 230 nm.

Le rendement (%) en composés photochromiques est le ratio de la quantité de composé photochromique retrouvé dans le film par rapport à la quantité théorique attendue.

Les résultats de ces essais sont rassemblés dans le Tableau III ci-après :

**TABLEAU III**

| Exemple N° | Date du dosage | Teneur en composé photochromique (%) |
|---|---|---|
| Comparatif A | 02/03/2000 | 6 |
| | 29/03/2000 | 4,08 |
| | 11/05/2000 | 2,5 |
| Sous forme de film séché en date du 29/02/00 | 29/03/2000 | 6 |
| | 11/05/2000 | 6 |
| 1 | 29/03/2000 | 6 |
| | 11/05/2000 | 5,6 |
| 2 | 29/03/2000 | 6 |
| | 11/05/2000 | 3,3 |
| 3 | 23/06/2000 | 5,3 |
| | 02/08/2000 | 4,8 |
| | 12/09/2000 | 3,3 |
| 4 | 23/06/2000 | 5,4 |
| | 02/08/2000 | 5,4 |
| | 12/09/2000 | 5,4 |
| 5 | 18/08/2000 | 4,1 |
| | 12/09/2000 | 4 |
| 6 | 02/11/2000 | 5,9 |
| | 08/12/2000 | 5,6 |

Les résultats du Tableau III montrent que la teneur en composé photochromique du latex comparatif A, qui ne contient pas d'agent de stabilisation des propriétés photochromiques selon l'invention, diminue considérablement, passant de 6 à 2,5% en un peu plus de deux mois.

Il est intéressant de constater que lorsque ce même latex est appliqué sous forme de film et séché, un substrat revêtu du film reste stable pendant la même période de temps (teneur en composé photochromique stable à 6%). Cela confirme que la dégradation du composé photochromique s'effectue bien dans le latex liquide.

Les exemples 1 à 5 montrent clairement que l'addition d'un agent selon l'invention stabilise la teneur en composé photochromique dans le latex liquide pendant des périodes d'au moins deux mois.

Les résultats montrent également que l'ajout de l'agent de stabilisation des propriétés photochromiques est, de préférence, à faire en début de polymérisation, sachant que cela ne perturbe en rien la cinétique de polymérisation.

En outre, les agents cyclohexéniques semblent conduire à des durées de stabilisation plus importantes, une dégradation significative des propriétés photochromiques apparaissant à partir de deux mois avec le MBOL, ce qui n'est pas le cas avec le cyclohexène.

Enfin, le cyclohexène présente l'avantage de ne donner aucune coloration résiduelle du film.

## Revendications

1. Procédé d'obtention d'un latex photochromique comprenant une polymérisation en émulsion aqueuse d'un mélange polymérisable initial comprenant un ou plusieurs monomères organiques à groupement C=C polymérisable par voie radicalaire et un ou plusieurs composé(s) photochromique(s) jusqu'à obtention d'un latex final **caractérisé en ce qu'**il comprend l'addition au mélange polymérisable initial, au cours de la polymérisation du mélange polymérisable initial ou dans le latex final d'une quantité effective d'au moins un agent de stabilisation des propriétés photochromiques choisi parmi les composés du cyclopentène, du cyclohexène, du cycloheptène, du cyclooctène et les composés comprenant une insaturation éthylénique ne faisant pas partie d'un cycle aromatique et qui comportent, en position α par rapport à l'insaturation éthylénique, un atome de carbone portant un groupe hydroxy libre.

2. Procédé selon la revendication 1, **caractérisé en ce que** l'agent de stabilisation est un composé du cyclohexène.

3. Procédé selon la revendication 2, **caractérisé en ce que** les composés du cyclohexène répondent à la formule : 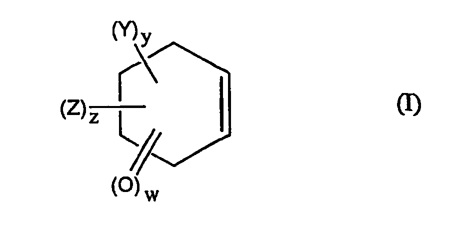 dans laquelle chaque Y est indépendamment un radical alkyle ayant de 1 à 4 atomes de carbone, Z est un groupe hydroxyle, 2-oxoéthyle, hydroxyalkyle ayant de 1 à 3 atomes de carbone, alcoxycarbonyle ayant de 2 à 5 atomes de carbone, ou un groupe R'COOR" - dans lequel R' est un radical alkyle ayant de 1 à 4 atomes de carbone et R" est un radical alcane di-yl ayant de 2 à 4 atomes de carbone ou un radical alkylidène ayant de 1 à 5 atomes de carbone, y est un entier de 0 à 3, z est égal à 0 ou 1, w est égal à 0 ou 1, et la somme de z et w est égale à 0 ou 1.

4. Procédé selon la revendication 3, **caractérisé en ce que** les composés du cyclohexène sont choisis parmi le cyclohexène, l'α-terpinéol, le terpinène-4-ol, l'α-terpinylacétate, l'α-terpinylpropionate, l'α-terpinylbutyrate, le 1-méthyl-1-cyclohexène, le 3-méthyl-1-cyclohexène, le 4-méthyl-1-cyclohexène, le méthyl-1-cyclohexène-1-carboxylate, le 3-méthyl-2-cyclohexène-1-ol, le 3-méthyl-2-cyclohexène-1-one, le 4-isopropyle-2-cyclohexène-1-one, le 3,5-diméthyl-2-cyclohexène-1-one, le 4,4-diméthyl-2-cyclohexène-1-one, l'isophorone, le 2,6,6-triméthyl-1-cyclohexène-1-acétaldéhyde, et le 3,5,5-triméthyl-2-cyclohexène-1-ol.

5. Procédé selon la revendication 3, **caractérisé en ce que** le composé du cyclohexène est le cyclohexène.

6. Procédé selon la revendication 1, **caractérisé en ce que** le carbone en α du composé à insaturation éthylénique est lié à au moins un atome d'hydrogène.

7. Procédé selon la revendication 6, **caractérisé en ce que** les composés à insaturation éthylénique répondent à la formule : 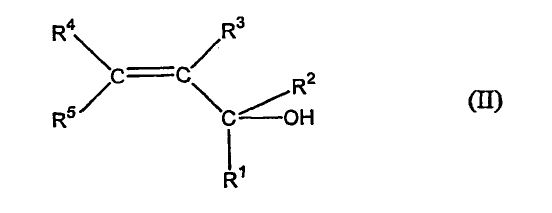 dans laquelle R¹ et R² représentent l'hydrogène ou l'un des groupes R¹ et R² représente l'hydrogène, cependant que l'autre forme avec le groupe R⁵ un cycle en C₅-C₁₀ qui peut être substitué par un ou plusieurs groupes alkyle linéaires ou ramifiés en C₁-C₄ ou un ou plusieurs groupes alkylène en C₂-C₄ ; ou l'un des groupes R¹, R² peut représenter l'hydrogène, cependant que l'autre représente un groupe alkyle aliphatique en C₁-C₆, un groupe hydrocarboné cyclique en C₄-C₁₆ ou un groupe hydrocarboné aromatique en C₆-C₁₆ ;
R³, R⁴ et R⁵, indépendamment les uns des autres, représentent l'hydrogène ou un groupe alkyle en C₁-C₆ qui peut être substitué par un ou plusieurs groupes OH et dans lesquels la chaîne peut être interrompue par un ou plusieurs groupes éther, ester ou cétone ; un groupe hydrocarboné aromatique en C₆-C₁₆ ou un groupe hydrocarboné cyclique en C₄-C₁₆ ; R⁵ peut former, avec un des groupes R¹ ou R², un cycle en C₅-C₁₀ qui peut être substitué par un ou plusieurs groupes alkyle linéaires ou ramifiés en C₁-C₄ ou un ou plusieurs groupes alkylène C₂-C₄, ;
R³ et R⁴ peuvent former un cycle en C₅-C₁₀ qui peut être substitué par un ou plusieurs groupes alkyle en C₁-C₄ ou groupes alkylènes en C₂-C₄ ;
Deux ou plus des atomes de carbone du cycle en C₅-C₁₀ formés avec R¹ ou R² et R⁵ ou avec R³ et R⁴, peuvent être liés par un pont hydrocarboné.

8. Procédé selon la revendication 7, **caractérisé en ce que** R¹ et R² représentent l'hydrogène, R³ représente le groupe méthyle, R⁴ représente l'hydrogène ou un groupe méthyle et R⁵ représente l'hydrogène, un groupe méthyle, un groupe éthyle ou un groupe CH₂OH.

9. Procédé selon la revendication 7, **caractérisé en ce que** le composé de formule (II) est choisi dans le groupe constitué de l'alcool allylique, l'alcool méthallylique, l'alcool crotylique, le 2-cyclohexène-1-ol, le trans-2-hexène-1-ol, le cis-2-butène-1,4-diol, le 3-méthyl-2-butène-1-ol, le trans-2-méthyl-3-phényl-2-propène-1-ol, le 3-butène-2-ol, le carvéol, le myrténol, le verbénol et l'alcool trans-cinnamylique.

10. Procédé selon la revendication 9, **caractérisé en ce que** le composé de formule (II) est le 3-méthyl-2-butène-1-ol.

11. Procédé selon l'une quelconque des revendications précédentes, **caractérisé en ce que** la quantité d'agent de stabilisation des propriétés photochromiques ajoutée représente 0,1 à 10% en masse, de préférence de 1 à 10% en masse, et mieux environ 5% en masse par rapport à la masse des monomères du mélange initial.

12. Procédé selon l'une quelconque des revendications précédentes, **caractérisé en ce que** l'émulsion aqueuse du mélange polymérisable initial est une mini-émulsion.

13. Procédé selon l'une quelconque des revendications précédentes, **caractérisé en ce que** les monomères polymérisables par voie radicalaire sont choisis parmi les acrylates d'alkyle, les méthacrylates d'alkyle et leurs mélanges.

14. Procédé selon l'une quelconque des revendications précédentes, **caractérisé en ce que** le composé photochromique est choisi parmi les chromènes, les spirooxazines et leurs mélanges.

15. Procédé selon l'une quelconque des revendications précédentes, **caractérisé en ce que** l'agent de stabilisation des propriétés photochromiques est ajouté au mélange polymérisable initial.

16. Latex photochromique stabilisé comprenant une dispersion aqueuse de particules de polymères résultant de la polymérisation par voie radicalaire d'un ou plusieurs monomère(s) organique(s) à groupement C=C et d'un ou plusieurs composé(s) photochromique(s), **caractérisé en ce qu'**il comporte une quantité effective d'au moins un agent de stabilisation des propriétés photochromiques choisi parmi les composés du cyclopentène, du cyclohexène, du cycloheptène, du cyclooctène et les composés comprenant une insaturation éthylénique ne faisant pas partie d'un cycle aromatique et qui comporte, en position α par rapport à l'insaturation éthylénique, un atome de carbone portant un groupe hydroxy libre.

17. Latex selon la revendication 16, **caractérisé en ce que** l'agent de stabilisation est un composé du cyclohexène.

18. Latex selon la revendication 17, **caractérisé en ce que** les composés cyclohexéniques répondent à la formule : 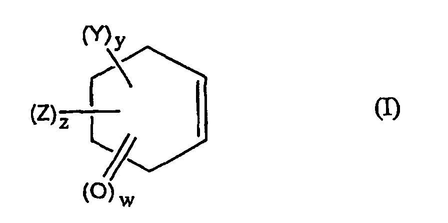 dans laquelle chaque Y est indépendamment un radical alkyle ayant de 1 à 4 atomes de carbone, Z est un groupe hydroxyle, 2-oxoéthyle, hydroxyalkyle ayant de 1 à 3 atomes de carbone, alcoxycarbonyle ayant de 2 à 5 atomes de carbone, ou un groupe R'COOR" - dans lequel R' est un radical alkyle ayant de 1 à 4 atomes de carbone et R" est un radical alcane di-yl ayant de 2 à 4 atomes de carbone ou un radical alkylidène ayant de 1 à 5 atomes de carbone, y est un entier de 0 à 3, z est égal à 0 où 1, w est égal à 0 ou 1, et la somme de z et w est égale à 0 ou 1.

19. Latex selon la revendication 18, **caractérisé en ce que** les composés cyclohexéniques sont choisis parmi le cyclohexène, l'α-terpinéol, le terpinène-4-ol, l'α-terpinylacétate, l'α-terpinylpropionate, l'α-terpinylbutyrate, le 1-méthyl-1-cyclohexène, le 3-méthyl-1-cyclohexène, le 4-méthyl-1-cyclohexène, le méthyl-1-cyclohexène-1-carboxylate, le 3-méthyl-2-cyclohexène-1-ol, le 3-méthyl-2-cyclohexène-1-one, le 4-isopropyle-2-cyclohexène-1-one, le 3,5-diméthyl-2-cyclohexène-1-one, le 4,4-diméthyl-2-cyclohexène-1-one, l'isophorone, le 2,6,6-triméthyl-1-cyclohexène-1-acétaldéhyde, et le 3,5,5-triméthyl-2-cyclohexène-1-ol.

20. Latex selon la revendication 18, **caractérisé en ce que** le composé cyclohexénique est le cyclohexène.

21. Latex selon la revendication 17, **caractérisé en ce que** le carbone en α du composé à insaturation éthylénique est lié à au moins un atome d'hydrogène.

22. Latex selon la revendication 17, **caractérisé en ce que** les composés à insaturation éthylénique répondent à la formule : 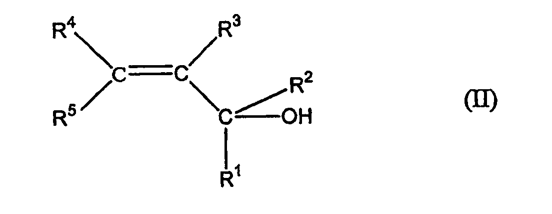 dans laquelle R¹ et R² représentent l'hydrogène ou l'un des groupes R¹ et R² représente l'hydrogène, cependant que l'autre forme avec le groupe R⁵ un cycle en C₅-C₁₀ qui peut être substitué par un ou plusieurs groupes alkyle linéaires ou ramifiés en C₁-C₄ ou un ou plusieurs groupes alkylène en C₂-C₄ ; ou l'un des groupes R¹, R² peut représenter l'hydrogène, cependant que l'autre représente un groupe alkyle aliphatique en C₁-C₆, un groupe hydrocarboné cyclique en C₄-C₁₆ ou un groupe hydrocarboné aromatique en C₆-C₁₆ ;
R³, R⁴ et R⁵, indépendamment les uns des autres, représentent l'hydrogène ou un groupe alkyle en C₁-C₆ qui peut être substitué par un ou plusieurs groupes OH et dans lesquels la chaîne peut être interrompue par un ou plusieurs groupes éther, ester ou cétone ; un groupe hydrocarboné aromatique en C₆-C₁₆ ou un groupe hydrocarboné cyclique en C₄-C₁₆ ; R⁵ peut former, avec un des groupes R¹ ou R², un cycle en C₅-C₁₀ qui peut être substitué par un ou plusieurs groupes alkyle linéaires ou ramifiés en C₁-C₄ ou un ou plusieurs groupes alkylène C₂-C₄, ;
R³ et R⁴ peuvent former un cycle en C₅-C₁₀ qui peut être substitué par un ou plusieurs groupes alkyle en C₁-C₄ ou groupes alkylènes en C₂-C₄ ;
Deux ou plus des atomes de carbone du cycle en C₅-C₁₀ formés avec R¹ ou R² et R⁵ ou avec R³ et R⁴, peuvent être liés par un pont hydrocarboné.

23. Latex selon la revendication 22, **caractérisé en ce que** R¹ et R² représentent l'hydrogène, R³ représente le groupe méthyle, R⁴ représente l'hydrogène ou un groupe méthyle et R⁵ représente l'hydrogène, un groupe méthyle, un groupe éthyle ou un groupe CH₂OH.

24. Latex selon la revendication 22, **caractérisé en ce que** le composé de formule (II) est choisi dans le groupe constitué de l'alcool allylique, l'alcool méthallylique, l'alcool crotylique, le 2-cyclohexène-1-ol, le trans-2-hexène-1-ol, le cis-2-butène-1,4-diol, le 3-méthyl-2-butène-1-ol, le trans-2-méthyl-3-phényl-2-propène-1-ol, le 3-butène-2-ol, le carvéol, le myrténol, le verbénol et l'alcool transcinnamylique.

25. Latex selon la revendication 24, **caractérisé en ce que** le composé à insaturation éthylénique est le 3-méthyl-2-butène-1-ol.

26. Latex selon l'une quelconque des revendications 16 à 25, **caractérisé en ce que** la quantité d'agent de stabilisation des propriétés photochromiques présente dans le latex représente 0,1 à 10% en masse, de préférence 1 à 10% en masse, mieux environ 5% en masse par rapport à la masse des monomères du mélange initial.

27. Latex selon l'une quelconque des revendications 16 à 26, **caractérisé en ce que** le polymère est un polyacrylate d'alkyle, un polyméthacrylate d'alkyle ou un copolymère d'acrylate d'alkyle et de méthacrylate d'alkyle.

28. Latex selon l'une quelconque des revendications 16 à 27, **caractérisé en ce que** le composé photochromique est choisi parmi les chromènes, les spirooxazines et leurs mélanges.

29. Substrat revêtu d'un film formé par séchage d'un latex selon l'une quelconque des revendications 16 à 28.

30. Substrat selon la revendication 29, **caractérisé en ce qu'**il est constitué par une lentille ophtalmique.

## Patentansprüche

1. Verfahren zum Erhalt eines photochromen Latex, umfassend eine Polymerisation in wässriger Emulsion einer polymerisierbaren Ausgangsmischung, umfassend ein oder mehrere organische Monomere mit radikalisch polymerisierbaren C=C-Gruppen und eine oder mehrere photochrome Verbindung(en), bis zum Erhalt eines endgültigen Latex, **dadurch gekennzeichnet, dass** es die Zugabe einer wirksamen Menge mindestens eines Stabilisierungsmittels mit photochromen Eigenschaften, ausgewählt aus Cyclopenten-, Cyclohexen-, Cyclohepten-, Cyclooctenverbindungen und den Verbindungen mit einer ethylenisch ungesättigten Position außerhalb eines aromatischen Rings umfasst und in α-Stellung bezogen auf die ethylenisch ungesättigte Position ein Kohlenstoffatom mit einer freien Hydroxylgruppe, zur polymerisierbaren Ausgangsmischung, im Verlauf der Polymerisation der polymerisierbaren Ausgangsmischung oder im endgültigen Latex umfasst.

2. Verfahren nach Anspruch 1, **dadurch gekennzeichnet, dass** das Stabilisierungsmittel eine Cyclohexenverbindung ist.

3. Verfahren nach Anspruch 2, **dadurch gekennzeichnet, dass** die Cyclohexenverbindungen der folgenden Formel entsprechen: 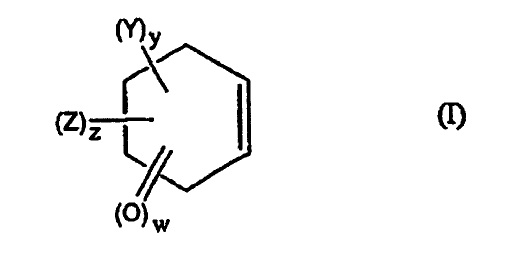 wobei in dieser Formel jedes Y unabhängig voneinander einen Alkylrest mit 1 bis 4 Kohlenstoffatomen darstellt, Z eine Hydroxylgruppe, einen 2-Oxoethylrest, einen Hydroxyalkylrest mit 1 bis 3 Kohlenstoffatomen, einen Alkoxycarbonylrest mit 2 bis 5 Kohlenstoffatomen oder eine Gruppe R'COOR" darstellt, in welcher R' ein Alkylrest mit 1 bis 4 Kohlenstoffatomen und R" ein Alkandiylrest mit 2 bis 4 Kohlenstoffatomen oder ein Alkylidenrest mit 1 bis 5 Kohlenstoffatomen ist, y eine ganze Zahl zwischen 0 und 3 ist, z gleich 0 oder 1 ist, w gleich 0 oder 1 ist und die Summe aus z und w gleich 0 oder 1 ist.

4. Verfahren nach Anspruch 3, **dadurch gekennzeichnet, dass** die Cyclohexenverbindungen ausgewählt werden aus Cyclohexen, α-Terpineol, Terpinen-4-ol, Essigsäure-α-terpinylester, Propansäure-α-terpinylester, Buttersäure-α-terpinylester, 1-Methyl-1-cyclohexen, 3-Methyl-1-cyclohexen, 4-Methyl-1-cyclohexen, Methyl-1-cyclohexen-1-carboxylat, 3-Methyl-2-cyclohexen-1-ol, 3-Methyl-2-cyclohexen-1-on, 4-Isopropyl-2-cyclohexen-1-on, 3,5-Dimethyl-2-cyclohexen-1-on, 4,4-Dimethyl-2-cyclohexen-1-on, Isophoron, 2,6,6-Trimethyl-1-cyclohexen-1-acetaldehyd und 3,5,5-Trimethyl-2-cyclohexen-1-ol.

5. Verfahren nach Anspruch 3, **dadurch gekennzeichnet, dass** die Cyclohexenverbindung Cyclohexen ist.

6. Verfahren nach Anspruch 1, **dadurch gekennzeichnet, dass** das Kohlenstoffatom in α-Stellung zur ethylenisch ungesättigten Position an mindestens ein Wasserstoffatom gebunden ist.

7. Verfahren nach Anspruch 6, **dadurch gekennzeichnet, dass** die Verbindungen mit einer ethylenisch ungesättigten Position der folgenden Formel entsprechen: 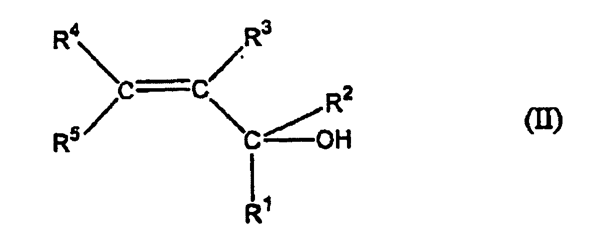 wobei in der Formel R¹ und R² ein Wasserstoffatom darstellen oder eine der Gruppen R¹ und R² ein Wasserstoffatom darstellt, während die andere mit der Gruppe R⁵ einen C₅-C₁₀-Ring bildet, der gegebenenfalls durch eine oder mehrere lineare oder verzweigte C₁-C₄-Alkylgruppen oder eine oder mehrere C₂-C₄-Alkylengruppen substituiert sein kann; oder eine der Gruppen R¹ und R² kann ein Wasserstoffatom darstellen, während die andere eine aliphatische C₁-C₆-Alkylgruppe, eine cyclische C₄-C₁₆-Kohlenwasserstoffgruppe oder eine aromatische C₆-C₁₆-Gruppe darstellt;
R³, R⁴ und R⁵ unabhängig voneinander ein Wasserstoffatom oder eine C₁-C₆-Alkylgruppe, die gegebenenfalls durch eine oder mehrere OH-Gruppen substituiert sein können und deren Ketten durch eine oder mehrere Ether-, Ester- oder Ketogruppen unterbrochen sein können, eine aromatische C₆-C₁₆-Gruppe oder eine cyclische C₄-C₁₆-Kohlenwasserstoffgruppe darstellen; R⁵ kann mit den Gruppen R¹ oder R² einen C₅-C₁₀-Ring bilden, der gegebenenfalls durch eine oder mehrere lineare oder verzweigte C₁-C₄-Alkylgruppen oder eine oder mehrer C₂-C₄-Alkylengruppen substituiert sein kann;
R³ und R⁴ können einen C₅-C₁₀-Ring bilden, der gegebenenfalls durch eine oder mehrere C₁-C₄-Alkylgruppen oder eine oder mehrere C₂-C₄-Alkylengruppen substituiert sein kann;
zwei oder mehrere der Kohlenstoffatome des aus R¹ oder R² und R⁵ oder aus R³ und R⁴ gebildeten C₅-C₁₀-Rings können durch eine Kohlenwasserstoffbrücke verbunden sein.

8. Verfahren nach Anspruch 7, **dadurch gekennzeichnet, dass** R¹ und R² ein Wasserstoffatom darstellen, R³ eine Methylgruppe darstellt, R⁴ ein Wasserstoffatom oder eine Methylgruppe darstellt und R⁵ ein Wasserstoffatom, eine Methylgruppe, eine Ethylgruppe oder eine CH₂OH-Gruppe darstellt.

9. Verfahren nach Anspruch 7, **dadurch gekennzeichnet, dass** die Verbindung mit der Formel (II) ausgewählt wird aus der Gruppe bestehend aus Allylalkohol, Methallylalkohol, Crotylalkohol, 2-Cyclohexen-1-ol, *trans*-2-Hexen-1-ol, *cis*-2-Buten-1,4-diol, 3-Methyl-2-buten-1-ol, *trans*-2-Methyl-3-phenyl-2-propen-1-ol, 3-Buten-2-ol, Carveol, Myrtenol, Verbenol und *trans*-Zimtalkohol.

10. Verfahren nach Anspruch 9, **dadurch gekennzeichnet, dass** die Verbindung mit der Formel (II) 3-Methyl-2-buten-1-ol ist.

11. Verfahren nach einem der vorhergehenden Ansprüche, **dadurch gekennzeichnet, dass** die zugegebene Menge an Stabilisierungsmittel mit photochromen Eigenschaften 0,1 bis 10 Massen-%, vorzugsweise 1 bis 10 Massen-% und mehr bevorzugt 5 Massen-% bezogen auf die Masse der Monomere der Ausgangsmischung beträgt.

12. Verfahren nach einem der vorhergehenden Ansprüche, **dadurch gekennzeichnet, dass** die wässrige Emulsion der polymerisierbaren Ausgangsmischung eine Miniemulsion ist.

13. Verfahren nach einem der vorhergehenden Ansprüche, **dadurch gekennzeichnet, dass** die radikalisch polymerisierbaren Monomere ausgewählt werden aus den Alkylacrylaten, Alkylmethacrylaten und ihren Mischungen.

14. Verfahren nach einem der vorhergehenden Ansprüche, **dadurch gekennzeichnet, dass** die photochrome Verbindung ausgewählt wird aus den Chromenen, den Spirooxazinen und ihren Mischungen.

15. Verfahren nach einem der vorhergehenden Ansprüche, **dadurch gekennzeichnet, dass** das Stabilisierungsmittel mit photochromen Eigenschaften zu der polymerisierbaren Ausgangsmischung gegeben wird.

16. Stabilisierter, photochromer Latex, umfassend eine wässrige Dispersion von Polymerpartikeln, resultierend aus der radikalischen Polymerisation eines oder mehrerer organischer Monomer(e) mit C=C-Gruppen und einer oder mehrerer photochromen Verbindung(en), **dadurch gekennzeichnet, dass** es eine wirksame Menge mindestens eines Stabilisierungsmittels mit photochromen Eigenschaften umfasst, ausgewählt aus Cyclopenten-, Cyclohexen-, Cyclohepten-, Cyclooctenverbindungen und den Verbindungen mit einer ethylenisch ungesättigten Position außerhalb eines aromatischen Rings umfasst und in α-Stellung bezogen auf die ethylenisch ungesättigte Position ein Kohlenstoffatom mit einer freien Hydroxylgruppe.

17. Latex nach Anspruch 16, **dadurch gekennzeichnet, dass** das Stabilisierungsmittel eine Cyclohexenverbindung ist.

18. Latex nach Anspruch 17, **dadurch gekennzeichnet, dass** die Cyclohexenverbindungen der folgenden Formel entsprechen: 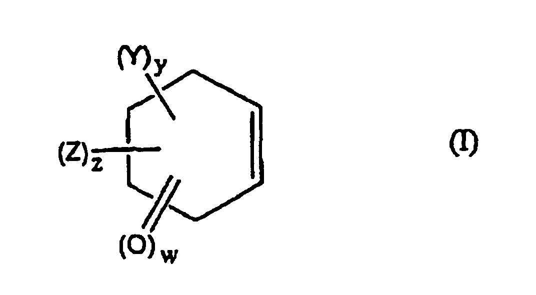 wobei in dieser Formel jedes Y unabhängig voneinander einen Alkylrest mit 1 bis 4 Kohlenstoffatomen darstellt, Z eine Hydroxylgruppe, einen 2-Oxoethylrest, einen Hydroxyalkylrest mit 1 bis 3 Kohlenstoffatomen, einen Alkoxycarbonylrest mit 2 bis 5 Kohlenstoffatomen oder eine Gruppe R'COOR" darstellt, in welcher R' ein Alkylrest mit 1 bis 4 Kohlenstoffatomen und R" ein Alkandiylrest mit 2 bis 4 Kohlenstoffatomen oder ein Alkylidenrest mit 1 bis 5 Kohlenstoffatomen ist, y eine ganze Zahl zwischen 0 und 3 ist, z gleich 0 oder 1 ist, w gleich 0 oder 1 ist und die Summe aus z und w gleich 0 oder 1 ist.

19. Latex nach Anspruch 18, **dadurch gekennzeichnet, dass** die Cyclohexenverbindungen ausgewählt werden aus Cyclohexen, α-Terpineol, Terpinen-4-ol, Essigsäure-α-terpinylester, Propansäure-α-terpinylester, Buttersäure-α-terpinylester, 1-Methyl-1-cyclohexen, 3-Methyl-1-cyclohexen, 4-Methyl-1-cyclohexen, Methyl-1-cyclohexen-1-carboxylat, 3-Methyl-2-cyclohexen-1-ol, 3-Methyl-2-cyclohexen-1-on, 4-Isopropyl-2-cyclohexen-1-on, 3,5-Dimethyl-2-cyclohexen-1-on, 4,4-Dimethyl-2-cyclohexen-1-on, Isophoron, 2,6,6-Trimethyl-1-cyclohexen-1-acetaldehyd und 3,5,5-Trimethyl-2-cyclohexen-1-ol.

20. Latex nach Anspruch 18, **dadurch gekennzeichnet, dass** die Cyclohexenverbindung Cyclohexen ist.

21. Latex nach Anspruch 17, **dadurch gekennzeichnet, dass** das Kohlenstoffatom in α-Stellung zur ethylenisch ungesättigten Position an mindestens ein Wasserstoffatom gebunden ist.

22. Latex nach Anspruch 17, **dadurch gekennzeichnet, dass** die Verbindungen mit einer ethylenisch ungesättigten Position der folgenden Formel entsprechen: 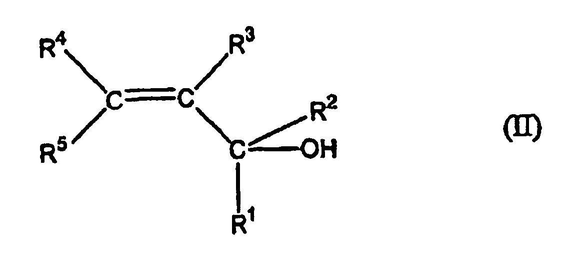 wobei in der Formel R¹ und R² ein Wasserstoffatom darstellen oder eine der Gruppen R¹ und R² ein Wasserstoffatom darstellt, während die andere mit der Gruppe R⁵ einen C₅-C₁₀-Ring bildet, der gegebenenfalls durch eine oder mehrere lineare oder verzweigte C₁-C₄-Alkylgruppen oder eine oder mehrere C₂-C₄-Alkylengruppen substituiert sein kann; oder eine der Gruppen R¹ und R² kann ein Wasserstoffatom darstellen, während die andere eine aliphatische C₁-C₆-Alkylgruppe, eine cyclische C₄-C₁₆-Kohlenwasserstoffgruppe oder eine aromatische C₆-C₁₆-Gruppe darstellt;
R³, R⁴ und R⁵ unabhängig voneinander ein Wasserstoffatom oder eine C₁-C₆-Alkylgruppe, die gegebenenfalls durch eine oder mehrere OH-Gruppen substituiert sein können und deren Ketten durch eine oder mehrere Ether-, Ester- oder Ketogruppen unterbrochen sein können, eine aromatische C₆-C₁₆-Gruppe oder eine cyclische C₄-C₁₆-Kohlenwasserstoffgruppe darstellen; R⁵ kann mit den Gruppen R¹ oder R² einen C₅-C₁₀-Ring bilden, der gegebenenfalls durch eine oder mehrere lineare oder verzweigte C₁-C₄-Alkylgruppen oder eine oder mehrer C₂-C₄-Alkylengruppen substituiert sein kann;
R³ und R⁴ können einen C₅-C₁₀-Ring bilden, der gegebenenfalls durch eine oder mehrere C₁-C₄-Alkylgruppen oder eine oder mehrer C₂-C₄-Alkylengruppen substituiert sein kann;
zwei oder mehrere der Kohlenstoffatome des aus R¹ oder R² und R⁵ oder aus R³ und R⁴ gebildeten C₅-C₁₀-Rings können durch eine Kohlenwasserstoffbrücke verbunden sein.

23. Latex nach Anspruch 22, **dadurch gekennzeichnet, dass** R¹ und R² ein Wasserstoffatom darstellen, R³ eine Methylgruppe darstellt, R⁴ ein Wasserstoffatom oder eine Methylgruppe darstellt und R⁵ ein Wasserstoffatom, eine Methylgruppe, eine Ethylgruppe oder eine CH₂OH-Gruppe darstellt.

24. Latex nach Anspruch 22 **dadurch gekennzeichnet, dass** die Verbindung mit der Formel (II) ausgewählt wird aus der Gruppe bestehend aus Allylalkohol, Methallylalkohol, Crotylalkohol, 2-Cyclohexen-1-ol, *trans*-2-Hexen-1-ol, *cis*-2-Buten-1,4-diol, 3-Methyl-2-buten-1-ol, *trans*-2-Methyl-3-phenyl-2-propen-1-ol, 3-Buten-2-ol, Carveol, Myrtenol, Verbenol und *trans*-Zimtalkohol.

25. Latex nach Anspruch 24, **dadurch gekennzeichnet, dass** die Verbindung mit der Formel (II) 3-Methyl-2-buten-1-ol ist.

26. Latex nach einem der Ansprüche 16 bis 25, **dadurch gekennzeichnet, dass** die zugegebene Menge an Stabilisierungsmittel mit photochromen Eigenschaften 0,1 bis 10 Massen-%, vorzugsweise 1 bis 10 Massen-% und mehr bevorzugt 5 Massen-% bezogen auf die Masse der Monomere der Ausgangsmischung beträgt.

27. Latex nach einem der Ansprüche 16 bis 26, **dadurch gekennzeichnet, dass** die radikalisch polymerisierbaren Monomere ausgewählt werden aus den Alkylacrylaten, Alkylmethacrylaten und ihren Mischungen.

28. Verfahren nach einem der Ansprüche 16 bis 27, **dadurch gekennzeichnet, dass** die photochrome Verbindung ausgewählt wird aus den Chromenen, den Spirooxazinen und ihren Mischungen.

29. Substrat, beschichtet mit einem durch Trocknen eines Latex nach einem der Ansprüche 16 bis 28 gebildeten Film.

30. Substrat nach Anspruch 29, **dadurch gekennzeichnet, dass** es aus eine ophthalmische Linse besteht.

## Claims

1. Method for obtaining a photochromic latex comprising a polymerization in aqueous emulsion of an initial polymerizable mixture comprising one or more organic monomers containing C=C groups which are polymerizable by free-radical mechanism and one or more photochromic compounds until a final latex is obtained, **characterized in that** it comprises the addition to the initial polymerizable mixture, during the polymerization of the initial polymerizable mixture or to the final latex of an effective quantity of at least one agent for stabilizing the photochromic properties selected from compounds of cyclopentene, cyclohexene, cycloheptene, cyclooctene and compounds containing an ethylenic unsaturation not forming part of an aromatic ring and which contain, in the α position with respect to the ethylenic unsaturation, a carbon atom having a free hydroxy group.

2. Method according to claim 1, **characterized in that** the stabilization agent is a compound of cyclohexene.

3. Method according to claim 2, **characterized in that** the cyclohexene compounds correspond to the formula : 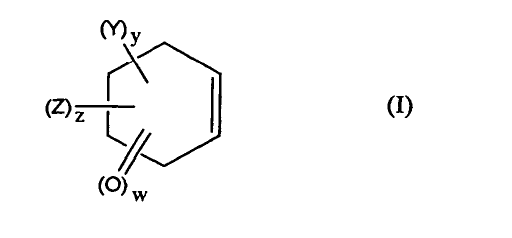 in which each Y is independently an alkyl group of 1 to 4 carbon atoms, Z is a hydroxy group, a 2-oxoethyl group, a hydroxyalkyl group of 1 to 3 carbon atoms, an alkoxycarbonyl group of 2 to 5 carbon atoms, or a R'COOR" group in which R' is an alkyl radical of 1 to 4 carbon atoms and R" is an alkane di-yl radical of 2 to 4 carbon atoms or an alkylidene radical of 1 to 5 carbon atoms, y is an integer from 0 to 3, z represents 0 or 1, w represents 0 or 1, and the sum of z and w is 0 or 1.

4. Method according to claim 3, **characterized in that** the cyclohexene compounds are selected from cyclohexene, α-terpineol, terpinen-4-ol, α-terpinyl acetate, α-terpinyl propionate, α-terpinyl butyrate, 1-methyl-1-cyclohexene, 3-methyl-1-cyclohexene, 4-methyl-1-cyclohexene, methyl 1-cyclohexene-1-carboxylate, 3-methyl-2-cyclohexen-1-ol, 3-methyl-2-cyclohexen-1-one, 4-isopropyl-2-cyclohexen-1-one, 3,5-dimethyl-2-cyclohexen-1-one, 4,4-dimethyl-2-cyclohexen-1-one, isophorone, 2,6,6-trimethyl-1-cyclohexene-1-acetaldehyde, and 3,5,5-trimethyl-2-cyclohexen-1-ol.

5. Method according to claim 3, **characterized in that** the cyclohexene compound is cyclohexene.

6. Method according to claim 1, **characterized in that** the carbon in the α position of the compound with ethylenic unsaturation is bonded to at least one hydrogen atom.

7. Method according to claim 6, **characterized in that** the compounds with ethylenic unsaturation correspond to the formula : 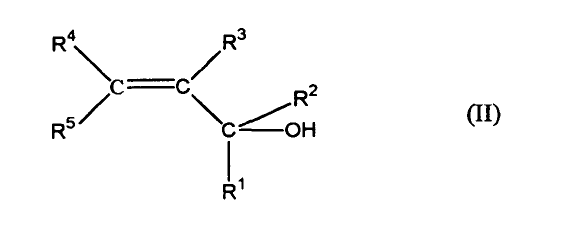 in which R¹ and R² represent hydrogen or one of the R¹ and R² groups represents hydrogen, while the other forms, with the R⁵ group, a C₅-C₁₀ ring which may be substituted with one or more linear or branched C₁-C₄ alkyl groups or one or more C₂-C₄ alkylene groups ; or one of the R¹, R² groups may represent hydrogen, while the other represents a C₁-C₆ aliphatic alkyl group, a C₄-C₁₆ cyclic hydrocarbon group or a C₆-C₁₆ aromatic hydrocarbon group ;
R³, R⁴ and R⁵ independently represent hydrogen or a C₁-C₆ alkyl group which may be substituted with one or more OH groups and in which the chain may be interrupted by one or more ether, ester or ketone groups ; a C₆-C₁₆ aromatic hydrocarbon group or a C₄-C₁₆ cyclic hydrocarbon group ; R⁵ may form, with one of the R¹ or R² groups, a C₅-C₁₀ ring which may be substituted with one or more linear or branched C₁-C₄ alkyl groups or one or more C₂-C₄ alkylene groups;
R³ and R⁴ may form a C₅-C₁₀ ring which may be substituted with one or more C₁-C₄ alkyl groups or C₂-C₄ alkylene groups ;
Two or more carbon atoms of the C₅-C₁₀ ring formed with R¹ or R² and R⁵ or with R³ and R⁴ may be bonded by a hydrocarbon bridge.

8. Method according to claim 7, **characterized in that** R¹ and R² represent hydrogen, R³ represents a methyl group, R⁴ represents hydrogen or a methyl group and R⁵ represents hydrogen, a methyl, ethyl or CH₂OH group.

9. Method according to claim 7, **characterized in that** the compound of formula (II) is selected from the group composed of allyl alcohol, methallyl alcohol, crotyl alcohol, 2-cyclohexen-1-ol, trans-2-hexen-1-ol, cis-2-butene-1,4-diol, 3-methyl-2-buten-1-ol, trans-2-methyl-3-phenyl-2-propen-1-ol, 3-buten-2-ol, carveol, myrtenol, verbenol and trans-cinnamyl alcohol.

10. Method according to claim 9, **characterized in that** the compound of formula (II) is 3-methyl-2-buten-1-ol.

11. Method according to any one of the preceding claims, **characterized in that** the quantity of photochromic property stabilization agent added represents 0.1 to 10% by weight, preferably 1 to 10% by weight and more preferably about 5% by weight compared to the weight of monomers in the initial mixture.

12. Method according to any one of the preceding claims, **characterized in that** the aqueous emulsion of the initial polymerizable mixture is a miniemulsion.

13. Method according to any one of the preceding claims, **characterized in that** the monomers polymerizable by free-radical mechanism are selected from the alkyl acrylates, the alkyl methacrylates and their mixtures.

14. Method according to any one of the preceding claims, **characterized in that** the photochromic compound is selected from the chromenes, the spirooxazines and their mixtures.

15. Method according to any one of the preceding claims, **characterized in that** the photochromic property stabilization agent is added to the initial polymerizable mixture.

16. Stabilized photochromic latex comprising an aqueous dispersion of polymer particles resulting from the free-radical polymerization of one or more organic monomers containing C=C groups and one or more photochromic compounds, **characterized in that** it comprises an effective quantity of at least one agent for stabilizing the photochromic properties selected from compounds of cyclopentene, cyclohexene, cycloheptene, cyclooctene and compounds containing an ethylenic unsaturation not forming part of an aromatic ring and which contain, in the α position with respect to the ethylenic unsaturation, a carbon atom having a free hydroxy group.

17. Latex according to claim 16, **characterized in that** the stabilization agent is a compound of cyclohexene.

18. Latex according to claim 17, **characterized in that** the cyclohexene compounds correspond to the formula : 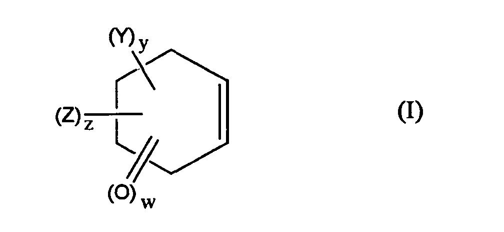 in which each Y is independently an alkyl group of 1 to 4 carbon atoms, Z is a hydroxy group, a 2-oxoethyl group, a hydroxyalkyl group of 1 to 3 carbon atoms, an alkoxycarbonyl group of 2 to 5 carbon atoms, or a R'COOR" group in which R' is an alkyl radical of 1 to 4 carbon atoms and R" is an alkane di-yl radical of 2 to 4 carbon atoms or an alkylidene radical of 1 to 5 carbon atoms, y is an integer from 0 to 3, z represents 0 or 1, w represents 0 or 1, and the sum of z and w is 0 or 1.

19. Latex according to claim 18, **characterized in that** the cyclohexene compounds are selected from cyclohexene, α-terpineol, terpinen-4-ol, α-terpinyl acetate, α-terpinyl propionate, α-terpinyl butyrate, 1-methyl-1-cyclohexene, 3-methyl-1-cyclohexene, 4-methyl-1-cyclohexene, methyl 1-cyclohexene-1-carboxylate, 3-methyl-2-cyclohexen-1-ol, 3-methyl-2-cyclohexen-1-one, 4-isopropyl-2-cyclohexen-1-one, 3,5-dimethyl-2-cyclohexen-1-one, 4,4-dimethyl-2-cyclohexen-1-one, isophorone, 2,6,6-trimethyl-1-cyclohexene-1-acetaldehyde, and 3,5,5-trimethyl-2-cyclohexen-1-ol.

20. Latex according to claim 18, **characterized in that** the cyclohexene compound is cyclohexene.

21. Latex according to claim 17, **characterized in that** the carbon in the α position of the compound with ethylenic unsaturation is bonded to at least one hydrogen atom.

22. Latex according to claim 17, **characterized in that** the compounds with ethylenic unsaturation correspond to the formula : 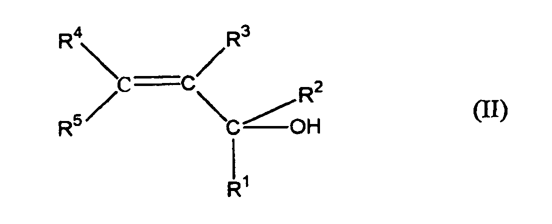 in which R¹ and R² represent hydrogen or one of the R¹ and R² groups represents hydrogen, while the other forms, with the R⁵ group, a C₅-C₁₀ ring which may be substituted with one or more linear or branched C₁-C₄ alkyl groups or one or more C₂-C₄ alkylene groups ; or one of the R¹, R² groups may represent hydrogen, while the other represents a C₁-C₆ aliphatic alkyl group, a C₄-C₁₆ cyclic hydrocarbon group or a C₆-C₁₆ aromatic hydrocarbon group ;
R³, R⁴ and R⁵ independently represent hydrogen or a C₁-C₆ alkyl group which may be substituted with one or more OH groups and in which the chain may be interrupted by one or more ether, ester or ketone groups ; a C₆-C₁₆ aromatic hydrocarbon group or a C₄-C₁₆ cyclic hydrocarbon group ; R⁵ may form, with one of the R¹ or R² groups, a C₅-C₁₀ ring which may be substituted with one or more linear or branched C₁-C₄ alkyl groups or one or more C₂-C₄ alkylene groups ;
R³ and R⁴ may form a C₅-C₁₀ ring which may be substituted with one or more C₁-C₄ alkyl groups or C₂-C₄ alkylene groups ;
Two or more carbon atoms of the C₅-C₁₀ ring formed with R¹ or R² and R⁵ or with R³ and R⁴ may be bonded by a hydrocarbon bridge.

23. Latex according to claim 22, **characterized in that** R¹ and R² represent hydrogen, R³ represents a methyl group, R⁴ represents hydrogen or a methyl group and R⁵ represents hydrogen, a methyl, ethyl or CH₂OH group.

24. Latex according to claim 22, **characterized in that** the compound of formula (II) is selected from the group composed of allyl alcohol, methallyl alcohol, crotyl alcohol, 2-cyclohexen-1-ol, trans-2-hexen-1-ol, cis-2-butene-1,4-diol, 3-methyl-2-buten-1-ol, trans-2-methyl-3-phenyl-2-propen-1-ol, 3-buten-2-ol, carveol, myrtenol, verbenol and trans-cinnamyl alcohol.

25. Latex according to claim 24, **characterized in that** the compound with ethylenic unsaturation is 3-methyl-2-buten-1-ol.

26. Latex according to any one of claims 16 to 25, **characterized in that** the quantity of photochromic property stabilization agent present in the latex represents 0.1 to 10% by weight, preferably 1 to 10% by weight and more preferably about 5% by weight compared to the weight of monomers in the initial mixture.

27. Latex according to any one of claims 16 to 26, **characterized in that** the polymer is an alkyl polyacrylate, an alkyl polymethacrylate or a copolymer of alkyl acrylate and alkyl methacrylate.

28. Latex according to any one of claims 16 to 27, **characterized in that** the photochromic compound is selected from the chromenes, the spirooxazines and their mixtures.

29. Substrate coated with a film formed by drying a latex according to any one of claims 16 to 28.

30. Substrate according to claim 29, **characterized in that** it consists of an ophthalmic lens.
